# EUROPÄISCHE PATENTANMELDUNG

(11) **EP 1 895 110 A2**
(43) Veröffentlichungstag der Anmeldung: **05.03.2008**
(21) Anmeldenummer: 06405240.0
(22) Anmeldetag: 30.05.2006
(51) Int. Cl.: F01K 3/10, F01K 15/02, F01K 15/04

(54) **Wärmebetriebenes Fahrzeug mit externer Energierzeugung**

(30) Priorität: 31.05.2005 CH 9262005
(71) Anmelder: Schwander, Andreas, 4103 Bottmingen (CH); Waller, Roger, 6300 Zug (CH)
(72) Erfinder: Schwander, Andreas, 4103 Bottmingen (CH); Waller, Roger, 6300 Zug (CH)

(57) **Zusammenfassung**

Das warmebetriebene Fahrzeug besitzt einen Wärmespeicher zur Speicherung von extern produzierter Wärmeenergie und eine Dampfmaschine zur Umsetzung der gespeicherten Wärmeenergie in mechanische Arbeit. Das Fahrzeug ist schienenungebunden, d.h. also ein Strassen- oder Wasserfahrzeug. Der Wärmespeicher ist ein Druckbehälter für Heisswasser oder ein Behälter in dem Wärme in mineralischen, synthetischen, metallenen oder andern Medien gespeichert werden kann.

## Beschreibung

Die Erfindung betrifft ein Wärmebetriebenes Fahrzeug, mit einem Wärmespeicher zur Speicherung von extern produzierter Wärmeenergie und einer Dampfmaschine zur Umsetzung der gespeicherten Wärmeenergie in mechanische Arbeit.

Unter dem Begriff "Fahrzeug" soll für den Zweck dieser Beschreibung jede Art von erdgebundenem Beforderungsmittel für Personen und Güter verstanden werden, d.h. also Bahnen, Strassenfahrzeuge, Schiffe, Aufzüge etc. Der Begriff "erdgebunden" soll sich in diesem Zusammenhang auf Festland und Wasser im Gegensatz zur Luft beziehen.

Unter dem Begriff "Dampfmaschine" soll für den Zweck dieser Beschreibung jede Art von thermischen Maschinen verstanden werden, d.h. also Dampfmaschinen, Dampfmotoren und Dampfturbinen, aber auch Expansionsmaschinen, die mit von Dampf verschiedenen Medien arbeiten.

Fahrzeuge die von Dampfmaschinen angetrieben werden, sind seit langem bekannt, vor allem Eisenbahnen und Schiffe. Von den Eisenbahnen ist auch bekannt, statt der Befeuerung jeder einzelnen Lokomotive, den Dampf extern von stationären Dampferzeugungsanlage zu beziehen. (Feuerlose Dampflokomotiven oder Dampfspeicherlokomotiven).

Der Erfindung liegt die Aufgabe zugrunde, bessere emissionsfreie Fahrzeuge ermöglichen, als dies die heutigen Elektromobile darstellen.

Erfindungsgemass wird dies erreicht durch ein Wärmebetriebenes Fahrzeug der eingangs genannten Art, das sich dadurch auszeichnet, dass es schienenungebunden ist.

Die Erfindung hat ferner ein System aus einem schienenungebundenen Fahrzeug mit Dampfmaschine und einer Anlage zur externen Dampferzeugung zum Gegenstand.

Ausserdem hat die Erfindung ein Verfahren zum Antrieb eines schienenungebundenen Fahrzeugs mit einer Dampfmaschine ohne Feuerung, sowie die Verwendung einer Dampfmaschine ohne Feuerung in einem schienenungebundenen Fahrzeug zum Gegenstand.

Insbesondere besteht die Erfindung aus einem mit Wärme angetriebenen Strassenfahrzeug und aus einem System, bestehend aus einem Strassenfahrzeug mit Dampfmaschine und Wärmespeicher, sowie einer externen Wärmeerzeugungsanlage, d.h. einer ausserhalb des Fahrzeugs und von ihm unabhängig angeordneten Wärmeerzeugungsanlage, die ihrerseits stationär oder mobil sein kann.

Gemäss einem anderen Aspekt der Erfindung wird die Aufgabe dadurch gelöst, dass als Speichermedium für die Wärmespeicherung ein von Wasser verschiedener Stoff eingesetzt wird.

Die Warme kann dabei in mineralischen, metallischen, synthetischen oder andern Stoffen gespeichert werden. Wahrend sich bei der Speicherung in Wasser Warme und Druck im selben Gefäss befinden, können bei der Speicherung in andern Stoffen Warme und Druck voneinander getrennt sein.

Gemeinsam ist allen Systemen, dass sie über ein ein- oder mehrstufiges Verfahren Wasser oder ein anderes geeignetes Arbeitsmedium erhitzen.

Mit Hilfe moderner Materialien und Konstruktionsprinzipien^ sowie neuen Methoden der Energieaufbereitung und der Energiespeicherung ist es möglich geworden, das Prinzip der feuerungslosen Dampfmaschine nicht nur in schienengebundenen Fahrzeugen zu nutzen. Entscheidend ist dabei, dass mit moderner Technik auch kleinere Fahrzeuge herstellbar sind, welche über adäquate Fahrleistungen verfügen.

Die erfindungsgemässen Fahrzeuge weisen die Vorteile des Antriebs durch Dampfmaschinen ohne Feuerung auf. Beispielsweise entsteht beim Betrieb keinerlei Abgas.

Dadurch lassen sich diese Fahrzeuge überall dort einsetzen, wo der Betrieb von Verbrennungsmotoren eingeschränkt oder verboten ist und der Personen- und Güterverkehr hauptsächlich oder ausschliesslich mit Elektromobilen abgewickelt wird, wie beispielsweise in Lagerhallen, Bahnhöfen, Flughäfen, Fabriken, Tiergärten, Vergnügungsparks, verkehrsberuhigten Wohnquartieren, Innenstädten mit hoher Luftbelastung, Luftkurorten und dergl. Der Ladevorgang des Wärmespeichers dauert lediglich Minuten im Gegensatz zum stundenlangen Aufladen von elektrischen Akkumulatoren. Zudem ist ein Wärmespeicher billiger und wesentlich langlebiger als elektrische Akkumulatoren. Auch ist stationär erzeugte Wärmeenergie in der Regel billiger als fossile Treibstoffe oder Elektrizität.

Ein weiterer Vorteil der stationären Energieerzeugung besteht darin, dass eine Vielfalt von Primärenergieformen zum Einsatz kommen kann, im Gegensatz zu Fahrzeugen mit Verbrennungsmotoren. So kann die Dampferzeugung mit Energieformen erfolgen, welche am Betriebsort besonders günstig vorhanden sind. Diese sind oft schadstoffarm oder schadstofffrei sowie C02-neutral oder C02-frei. Weiter können einzelne Wärmeerzeugungsanlagen kombiniert werden. Dazu gehören Mull- und Sondermullverbrennungsanlagen, Fernwärmenetze, Holz- und Holzschnitzelheizungen, Pellets, Abwärme aller Art, Geothermie, Methangas aus Abwasseraufbereitungsanlagen oder der Landwirtschaft, thermische Solarenergie oder Nuklearenergie.

Ein anderer Vorteil von Dampfmaschinen in Fahrzeugen besteht darin, dass sie mit sehr hohem Drehmoment die Achsen direkt antreiben können und mit derselben Geschwindigkeit und Leistung vorwärts und rückwärts laufen. Dies wirkt sich sowohl auf die Herstellungs- als auch auf die Wartungskosten, sowie die Lebensdauer des Fahrzeugs vorteilhaft aus.

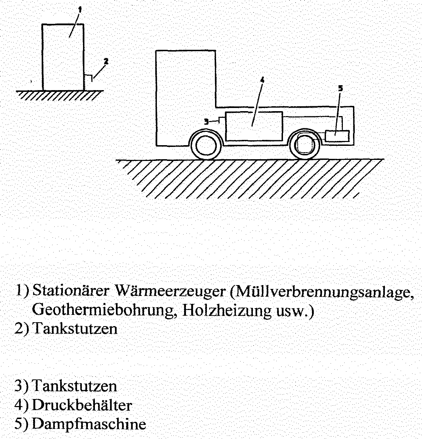

Im Folgenden wird anhand der Zeichnung ein Ausführungsbeispiel der Erfindung beschrieben:

In einer externen Dampferzeugungsanlage 1 wird Dampf unter hohem Druck produziert, welcher über einen Anschluss 2 zur Verfugung steht.

Ein schienenungebundenes Fahrzeug 6 besitzt einen Heisswasserspeicher 4 der mit einem Anschluss 3 zur Verbindung mit dem Anschluss 2 der Dampferzeugungsanlage versehen ist. Durch Verbindung der Anschlüsse 2 und 3 kann der Heisswasserspeicher 4 des Fahrzeugs mit Dampf bzw. 10 überhitztem Wasser betankt werden. Der Speicher 4 wird nur soweit gefüllt, dass ein Dampfraum verbleibt. Der Heisswasserspeicher ist ausserdem mit einer Dampfmaschine 5 verbunden. Der Dampf im Dampfraum des Speichers dient zum Antrieb der Dampfmaschine, ihrerseits für den mechanischen Antrieb des Fahrzeugs sorgt. Die Dampfentnahme fuhrt zu einer Druckabsenkung des unter hohem Druck gespeicherten Heisswassers, wodurch aus der Flüssigkeitswarme weitere Dampfmengen von entsprechend niedrigerem Druck gebildet werden. Nach Ausnützen des Druckgefälles zwischen dem hohen Speicherdruck und dem niedrigeren Arbeitsdruck der Dampfmaschine, muss der Speicher erneut geladen werden.

## Patentansprüche

1. Wärmebetriebenes Fahrzeug, mit einem Wärmespeicher zur Speicherung von extern produzierter Wärmeenergie und einer Dampfmaschine zur Umsetzung der gespeicherten Wärmeenergie in mechanische Arbeit, **dadurch gekennzeichnet, dass** das Fahrzeug schienengebunden ist.

2. Fahrzeug nach Anspruch 1, **dadurch gekennzeichnet, dass** es ein Strassen- oder Wasserfahrzeug ist.

3. Fahrzeug nach Anspruch 1, **dadurch gekennzeichnet, dass** der Wärmespeicher ein Druckbehälter für Heisswasser ist.

4. Fahrzeug nach Anspruch 1, **dadurch gekennzeichnet dass**v der Wärmespeicher ein von Wasser verschiedenes Speichermedium enthält.

5. Fahrzeug nach Anspruch 4, **dadurch gekennzeichnet, dass** das Speichermedium zur Gruppe der mineralischen, synthetischen oder metallischen Stoffe gehört.

6. Beforderungssystem, **gekennzeichnet durch** ein Fahrzeug gemass Anspruch 1 und eine Anlage zur externen Wärmeerzeugung und zum Betanken des Fahrzeugs mit Wärmeenergie.

7. Verfahren zum Antrieb eines schienenungebundenen Fahrzeugs, **dadurch gekennzeichnet, dass** es durch eine feuerungslose Dampfmaschine angetrieben wird und die Energie von einer externen stationären oder mobilen Anlage bezogen und im Fahrzeug gespeichert wird.

8. Verfahren nach Anspruch 7, **dadurch gekennzeichnet, dass** das Fahrzeug mit unter hohem Druck stehenden Heisswasser, Dampf oder überhitztem Dampf betankt und mit einer Dampfmaschine betrieben wird.

9. Verfahren nach Anspruch 7, **dadurch gekennzeichnet, dass** das Fahrzeug mit Wärme oder mit Materialien, die Wärme in sich gespeichert haben, betankt oder betrieben wird.

10. Verwendung einer Dampfmaschine ohne Feuerung in einem schienenungebundenen Fahrzeug.

11. Wärmebetriebenes Fahrzeug, mit einem Wärmespeicher zur Speicherung von extern produzierter Wärmeenergie und einer Dampfmaschine zur Umsetzung der gespeicherten Wärmeenergie in mechanische Arbeit, **dadurch gekennzeichnet, dass** der Wärmespeicher ein von Wasser verschiedenes Medium ist.

12. Fahrzeug nach Anspruch 11, **dadurch gekennzeichnet, dass** es ein Schienenfahrzeug ist.
